(19) Europäisches Patentamt
European Patent Office
Office européen des brevets

(11) **EP 2 819 902 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(51) Int Cl.:
*B60W 40/107* (2012.01)  *B60W 40/105* (2012.01)
*G01C 21/34* (2006.01)  *B60W 50/00* (2006.01)
*B60W 40/09* (2012.01)

(21) Anmeldenummer: **13705922.6**

(22) Anmeldetag: **23.02.2013**

(86) Internationale Anmeldenummer:
**PCT/EP2013/000531**

(87) Internationale Veröffentlichungsnummer:
**WO 2013/127509 (06.09.2013 Gazette 2013/36)**

(54) **VERFAHREN UND VORRICHTUNG ZUR ERMITTLUNG EINER PRÄDIKTIONSGÜTE**

METHOD AND DEVICE FOR DETERMINING A PREDICTION QUALITY

PROCÉDÉ ET DISPOSITIF DE DÉTERMINATION D'UN FACTEUR DE PRÉDICTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2012 DE 102012004258**

(43) Veröffentlichungstag der Anmeldung:
**07.01.2015 Patentblatt 2015/02**

(73) Patentinhaber: **Audi AG**
**85045 Ingolstadt (DE)**

(72) Erfinder:
• **PAPAJEWSKI, Jens**
**86697 Unterhausen (DE)**
• **HAMACHER, Michael**
**86633 Neuburg (DE)**
• **MUßNER, Helena**
**80805 München (DE)**

(74) Vertreter: **Schuster, Simon**
**c/o AUDI AG, Patentabteilung**
**85045 Ingolstadt (DE)**

(56) Entgegenhaltungen:
DE-A1-102007 007 955  DE-A1-102007 036 794
DE-A1-102007 059 120  DE-A1-102008 035 944
DE-A1-102010 015 342  US-A1- 2010 235 030

**Beschreibung**

Die vorliegende Erfindung betrifft ein Verfahren und eine Vorrichtung zur Ermittlung einer Prädiktionsgüte um einen prädizierten Energieverbrauch eines Kraftfahrzeugs.

Bei der Motorsteuerung oder der Betriebsstrategie von Kraftfahrzeugen, insbesondere von elektrifizierten Fahrzeugen oder Hybrid-Fahrzeugen, werden derzeit ganz überwiegend aktuelle Sensordaten zur Steuerung des Antriebsstrangs verwendet, es erfolgt jedoch keine Berücksichtigung des gesamten geplanten Streckenverlaufs einer Fahrt. Dies ist insoweit von Nachteil, als hierdurch keine optimale Anpassung der Motorsteuerung oder Betriebsstrategie an den geplanten Streckenverlauf vorgenommen werden kann.

Zur Überwindung dieses Nachteils sind verschiedene Verfahren entwickelt worden. So ist beispielsweise aus der DE 10 2008 035 944 A1 ein Verfahren zum Optimieren des Fahrbetriebs eines Kraftfahrzeugs unter Zugrundelegung mehrerer Parameter bekannt, wobei durch Vorgabe eines Fahrtziels eine Fahrtroute des Fahrzeugs ermittelt wird, mehrere unterschiedliche Streckenparameter, die für ein Streckenprofil der ermittelten Fahrtroute des Fahrzeugs zwischen dem geometrischen Ort oder einem Fahrtstartpunkt des Fahrzeugs und dem Fahrtziel charakteristisch sind, ermittelt werden, und wenigsten eine Fahrbedingung ermittelt wird, die für die ermittelte Fahrtroute des Fahrzeugs zwischen dem geometrischen Ort des Fahrzeugs oder dem Fahrtstartpunkt und dem Fahrtziel charakteristisch ist. Unter Berücksichtigung der Streckenparameter und der Fahrbedingung wird eine Soll-Fahrgeschwindigkeit des Fahrzeugs entlang der ermittelten Fahrtroute bestimmt, wobei die Fahrtroute in mehrere Segmente unterteilt wird und die Unterteilung der Fahrtroute in Segmente auf Grundlage der Streckenparameter und/oder der Fahrbedingung erfolgt. US 2010/0235030 beschreibt ein Verfahren zur Ermittlung der Güte einer Vorhersage des Energieverbrauchs eines Kraftfahrzeugs mit den Schritten: a) Bereitstellen einer Mehrzahl von Manöverklassen, denen als definierende Größen zumindest eine Einganggeschwindigkeit und eine Ausgangsgeschwindigkeit eines Fahrzeugs zugeordnet ist; b) Wiederholtes Ausführen des Manövers einer jeden Manöverklasse durch einen Fahrer mit dem Fahrzeug und Ermitteln von Mittelwerten für Geschwindigkeit oder Geschwindigkeitsänderung in Abhängigkeit von der Anzahl der Wiederholungen des Manövers; c) Wiederholung von Schritt b) zumindest bis für jedes Manöver ein statistisch aussagekräftiger Mittelwert für Geschwindigkeit oder Geschwindigkeitsänderung erhalten wird; d) Auswahl einer vorbestimmten Route anhand eines zweiten Datensatzes, durch den eine Mehrzahl von Strecken mit einer Vielzahl von Streckensegmenten definiert ist; e) Berechnung des prädizierten Energieverbrauchs für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver. Aus der DE 10 2007 036 794 ist ein Verfahren und eine Vorrichtung zur Festlegung der Fahrstrategie eines Kraftfahrzeuges bekannt, wobei für eine vorgegebene Fahrroute ein Korridor für eine mögliche Soll-Fahrgeschwindigkeit mit einer oberen und einer unteren Geschwindigkeitsgrenze über die Fahrstrecke definiert wird.

Und in der nicht vorveröffentlichten DE 10 2010 047 080.5 wird ein Verfahren zum Gewinnen eines Datensatzes vorgeschlagen, der die vorhergesagte Geschwindigkeit eines Fahrzeugs über eine Vielzahl von Streckenpunkten einer Route wiedergibt oder alternativ die Geschwindigkeit Zeitpunkten zuordnet, die bezüglich einer Fahrt auf der Route definiert sind. Der Datensatz ergibt in seiner Gesamtheit bei beiden Alternativen ein Geschwindigkeitsprofil.

Das Verfahren zum Gewinnen eines Datensatzes gemäß der DE 10 2010 047 080.5, der die vorhergesagte Geschwindigkeit eines Fahrzeugs über eine Vielzahl von Streckenpunkten einer Route oder von Zeitpunkten beim Befahren der Route als Geschwindigkeitsprofil wiedergibt, enthält die Schritte:

a) Bereitstellen eines ersten Datensatzes, durch den einer Vielzahl von Strecken Streckenpunkte zugeordnet sind,

b) Bereitstellen eines zweiten Datensatzes, durch den eine Mehrzahl von Vorgängen definiert ist, denen als definierende Größen zumindest eine Eingangsgeschwindigkeit und eine Ausgangsgeschwindigkeit zugeordnet sind,

c) Auswahl einer vorbestimmten Route anhand des ersten Datensatzes,

d) Ermitteln eines vorläufigen Geschwindigkeitsprofils für die Fahrt eines Fahrzeugs über die vorbestimmte Route,

e) Aufteilen der Route in Streckenabschnitte, denen jeweils ein Vorgang aus den in dem zweiten Datensatz definierten Vorgängen zugeordnet wird, anhand des vorläufigen Geschwindigkeitsprofils, und

f) Festlegen eines Geschwindigkeitsprofils zu jedem in Schritt e) zugeordneten Vorgang, wobei das Festlegen zu einzelnen Vorgängen oder zu Vorgangsgruppen aus aufeinanderfolgenden Vorgängen erfolgt und bei zumindest einem bzw. einer der einzelnen Vorgänge oder Vorgangsgruppen hierbei berücksichtigt wird, welcher Vorgang oder welche Vorgangsgruppe vorausgeht oder nachfolgt.

Gemäß der DE 10 2010 047 080.5 wird zunächst ein erster Datensatz bereitgestellt, der einer Vielzahl von Strecken oder (Teil-)Routen (möglichst auf einem vollständigen Straßennetz) Streckenpunkte zuordnet. Ferner wird ein zweiter Datensatz bereitgestellt, durch den eine Mehrzahl an Vorgängen definiert ist, wobei als definierende Größen zumindest eine Eingangsgeschwindigkeit und eine Ausgangsgeschwindigkeit vorgesehen sind. Es werden im Rahmen der Bereitstellung des zweiten Datensatzes vorzugsweise nur solche Vorgänge definiert, die jeweils gemäß ihrer Definition oder wenigstens in ähnlicher Form tatsächlich auftreten. Beispielsweise ein Vorgang, bei dem ein Fahrzeug von 0 km/h auf 53 km/h beschleunigt, wie es für das Beschleunigen an einer Ampel innerorts nach deren Schalten auf "Grün" charakteristisch ist. Oder ein Vorgang des Beschleunigens von 53 km/h auf 85 km/h, wenn der Fahrzeugführer den Ort verlässt und eine Geschwindigkeitsbeschränkung von 80 km/h vorliegt. Oder eine Beschleunigung von 85 km/h bis auf 130 km/h bei einer Auffahrt auf eine Autobahn. Der tatsächliche Vorgang einer Beschleunigung von 0 km/h auf 130 km/h lässt sich somit aus einer Mehrzahl von Teilvorgängen zusammensetzen.

Gemäß der DE 10 2010 047 080.5 erfolgt eine Auswahl einer vorbestimmten Route und zu der Route wird ein vorläufiges Geschwindigkeitsprofil der Fahrt eines bestimmten Fahrzeugs über die vorbestimmte Route ermittelt. Es erfolgt das Aufteilen der Route, insbesondere das vollständige Aufteilen der Route, in Streckenabschnitte, und zwar dergestalt, dass jedem Streckenabschnitt ein Vorgang aus den im zweiten Datensatz definierten Vorgängen zugeordnet wird. Das Aufteilen der Route erfolgt anhand des vorläufigen Geschwindigkeitsprofils. Auf diese Weise kann dann ein endgültiges Geschwindigkeitsprofil gewonnen werden. Bei dem Verfahren gemäß DE 10 2010 047 080.5 wird zu jedem Vorgang hierfür ein Geschwindigkeitsprofil festgelegt. Es wird hier insbesondere zumindest teilweise berücksichtigt, was außerhalb des einen Vorgangs geschieht. So können zum einen mehrere Vorgänge zu einer Vorgangsgruppe, gewissermaßen einem neuen Vorgang, zusammengefasst werden und der ganzen Vorgangsgruppe ein Geschwindigkeitsprofil zugeordnet werden.

Gemäß der DE 10 2010 047 080.5 hat in zumindest einem Fall das festgelegte Geschwindigkeitsprofil ein Aussehen, welches maßgeblich von dem benachbarten Vorgang (bzw. der benachbarten Vorgangsgruppe) abhängt. Beispielsweise kann man der selben Konstantgeschwindigkeit aus dem vorläufigen Geschwindigkeitsprofil Unterschiedliches zuordnen, je nachdem, wie sich die Fahrt fortsetzt. Bei Fahrt mit 40 km/h innerorts wird regelmäßig an Ampeln angehalten, also vollständig auf 0 km/h heruntergebremst. Bei Fahrt mit 40 km/h aus einem Ort heraus kann eine nachfolgende Beschleunigung erfolgen, so dass der Fahrer bereits zuvor immer schon ein wenig vorab beschleunigt und wieder leicht abbremst.

Die DE 10 2010 047 080.5 macht Gebrauch vom Konzept eines "Vorgangs", dem eine Eingangsgeschwindigkeit und eine Ausgangsgeschwindigkeit zugeordnet sind; es wird das Konzept eingeführt, situative Kontexte zu definieren. Die Verwendung des Konzepts eines "Vorgangs" geht auch darüber hinaus, einfach bestimmten Strecken eine Durchschnittszeit zuzuordnen und diese einem bestimmten Zweig in einem graphischen Baum, der das Straßenverkehrsnetz symbolisch wiedergibt, zuzuordnen. Die Gesamtheit der Vorgänge kann und soll insbesondere die Eigenschaft haben, dass sich die Fahrt längs einer Route tatsächlich in eine Vielzahl von Vorgängen aufteilen lässt, ohne dass undefinierte Situationen verbleiben.

Das Konzept des Vorgangs kann über das Konzept einer einfachen Beschleunigung über eine bestimmte Strecke, gegebenenfalls mit einer bestimmten Steigung, (oder einer einfachen Konstantfahrt oder einer einfachen Verzögerung) hinaus auch komplexere Kontexte widerspiegeln. Somit wird bevorzugt das Definieren der Vorgänge so gestaltet, dass zu zumindest einem Teil der Vorgänge ein Verlauf der Geschwindigkeit zwischen der Eingangsgeschwindigkeit und der Ausgangsgeschwindigkeit festgelegt wird, der einen nicht-linearen Abschnitt umfasst. Es werden gewissermaßen Zwischenwerte für die Geschwindigkeit angegeben, und diese gehen nicht einfach aus einem linearen Zusammenhang hervor. Beispielsweise kann ein Vorgang einem Fahrmanöver zugeordnet sein, bei dem der Fahrzeugführer eine Kurve durchfährt: Er bremst das Fahrzeug zunächst ein wenig ab, beschleunigt dann aber aus der Kurve heraus wieder bis zur nächsten Geradeausfahrt. Durch die Maßnahme des Vorsehens von Zwischenwerten für die Geschwindigkeit lässt sich insbesondere auch außerhalb der Fahrbahn liegenden Gegebenheiten Rechnung tragen. So kann ein Vorgang auch in gewisser Hinsicht einer statistisch schwankenden Größe Rechnung tragen: Vor einer Ampel kann es sein, dass das Fahrzeug vollständig zum Stillstand kommen muss, es kann aber auch sein, dass das Fahrzeug sogar leicht beschleunigt, um über die Ampel fahren zu können. Was sich im Mittel daraus ergibt, lässt sich durch einen bestimmten Vorgang wiedergeben, bei dem z. B. auf eine Geschwindigkeit von > 0 km/h herabgebremst wird, wobei anschließend wieder beschleunigt wird.

Auch wird in der DE 10 2010 047 080.5 eine neuartige Modellierung einer typischen Fahrt vorgeschlagen, bei der eine konstante Geschwindigkeit gewünscht ist: In der Realität schwankt die tatsächliche Geschwindigkeit etwas um die gewünschte Geschwindigkeit; diese lässt sich in einem Modell durch eine oszillatorische Änderung der Geschwindigkeit wiedergeben. Somit wird bevorzugt in dem nicht-linearen Abschnitt ein linearer Verlauf der Geschwindigkeit durch einen oszillatorischen Verlauf der Geschwindigkeit überlagert. Genauso kann auch ein Geschwindigkeitsprofil festgelegt werden, bei dem ein Abschnitt mit linear verlaufender Geschwindigkeit von einem Abschnitt unterbrochen wird, bei dem die Geschwindigkeit spontan, insbesondere soweit als im Rahmen der Fahrzeugführung möglich ist, erhöht oder erniedrigt wird. Vorzugsweise wird nach der Unterbrechung zum unterbrochenen linearen Verlauf zurückgekehrt, entweder bei einem Geschwindigkeitswert, bei dem die Unterbrechung erfolgte, oder bei einer sich bei Fortsetzung des linearen Verlaufs über die Zeit an sich, ohne die Unterbrechung, ergeben habenden Geschwindigkeit.

Bevorzugt umfasst das Verfahren gemäß der DE 10 2010 047 080.5, dass eine Mehrzahl von Routen befahren wird und hierbei Messwerte zur Fahrzeuggeschwindigkeit an bestimmten Streckenpunkten gewonnen werden. Die sich in den Messwerten indirekt widerspiegelnde Erfahrung wird dann in direkter Weise dadurch sichtbar gemacht, dass eine Mehrzahl (aber bevorzugt eine endliche Zahl) von Vorgängen definiert wird, denen eine Eingangsgeschwindigkeit, und eine Ausgangsgeschwindigkeit zugeordnet ist, und zwar erfolgt das Definieren aufgrund der gewonnenen Messwerte.

Durch die DE 10 2010 047 080.5 lässt sich auch die an sich bekannte Maßnahme, nach einer Mehrzahl von Fahrstilen zu unterscheiden, besonders wirksam nutzen. Es lässt sich in dem zweiten Datensatz eine Mehrzahl von Fahrstilen zuordnen (wenn ausreichendes Datenmaterial zur Verfügung steht). Es lassen sich dann bestimmte Vorgänge passend zu einem bestimmten Fahrstil definieren. Durch das Festlegen des Fahrstils (Auswählen bzw. Zuordnen) wird dann klar, welche Mehrzahl von Vorgängen relevant ist. Es wird dann zu jedem Streckenabschnitt nur ein Vorgang aus dem im zweiten Datensatz zu genau diesem Fahrstil definierten Vorgängen zugeordnet.

Bevorzugt wird gemäß der DE 10 2010 047 080.5 zudem auch bereits beim Ermitteln des vorläufigen Geschwindigkeitsprofils der ausgewählte bzw. zugeordnete Fahrstil berücksichtigt. (Beispielsweise kann bei einem bestimmten Fahrstil von einer Überschreitung der maximal zulässigen Geschwindigkeit um einen bestimmten Betrag ausgegangen werden etc., wohingegen bei einem anderen Fahrstil davon ausgegangen wird, dass versucht wird, exakt die maximal zulässige Geschwindigkeit einzuhalten.)

Bei einem bevorzugen Aspekt gemäß der DE 10 2010 047 080.5 ist in an sich bekannter Weise bei dem in Schritt a) bereitgestellten Datensatz auch eine Information über die Art von Straßen beinhaltet, und diese Information wird bevorzugt auch in Schritt f) berücksichtigt. Gleiches gilt für das Berücksichtigen einer Eingangshöhe und einer Ausgangshöhe, evt. auch einer Steigung.

Zur späteren Ermittlung des Energieverbrauchs beim Befahren der vorbestimmten Route kann es gemäß der DE 10 2010 047 080.5 hilfreich sein, anhand des endgültigen Geschwindigkeitsprofils die an den Rädern eines die Route befahrenden Kraftfahrzeugs aufzubringende Leistung zu ermitteln, und zwar zugeordnet zu den Streckenpunkten oder Zeitpunkten, zu denen auch die Daten des Datensatzes zum Geschwindigkeitsprofil gegeben sind.

Anhand des endgültigen Geschwindigkeitsprofils kann zudem eine Zahl zur Angabe der Güte der Vorhersage ermittelt werden.

Das Verfahren gemäß der DE 10 2010 047 080.5 wird bevorzugt im Rahmen der Bedienung einer Navigationsvorrichtung in einem Kraftfahrzeug durchgeführt, es ist jedoch die Verwendung alternativer Datenverarbeitungseinrichtungen denkbar. Grundsätzlich gilt, dass der erste und zweite Datensatz in einem Speicher eines Kraftfahrzeugs abgelegt werden, dass Schritt c) anhand einer Bedienvorrichtung in dem Kraftfahrzeug erfolgt und die Schritte d) bis f) durch eine Datenverarbeitung des Kraftfahrzeugs durchgeführt werden.

Wie aus der obigen Darstellung ersichtlich ist, basiert bisher eine Vorausschau eines Fahrprofils immer auf Daten aus einer Datenbank und weist somit zu dem realen Fahrprofil immer Abweichungen auf. Eine Vorausschau ist jedoch nur dann optimal nutzbar, wenn man auch ihre Qualität kennt. Eine solches Qualitäts- oder Gütekriterium existiert bisher nicht.

Es ist daher Aufgabe der vorliegenden Erfindung, die Nachteile des Stands der Technik zu überwinden.

Diese Aufgabe wird durch das Verfahren gemäß Anspruch 1 und die Vorrichtung gemäß Anspruch 8 gelöst. Vorteilhafte Weiterbildungen der Erfindung sind Gegenstand der Unteransprüche.

Das erfindungsgemäße Verfahren zur Ermittlung einer Prädiktionsgüte um einen prädizierten Energieverbrauch eines Kraftfahrzeugs weist die folgenden Schritte auf:

a) Bereitstellen einer Mehrzahl von Manöverklassen, denen als definierende Größen zumindest eine Eingangeschwindigkeit und eine Ausgangsgeschwindigkeit eines Fahrzeugs zugeordnet ist;

b) Wiederholtes Ausführen des Manövers einer jeden Manöverklasse durch einen Fahrer mit dem Fahrzeug und Ermitteln von Mittelwerten für Geschwindigkeit oder Geschwindigkeitsänderung in Abhängigkeit von der Anzahl der Wiederholungen des Manövers;

c) Wiederholung von Schritt b) zumindest bis für jedes Manöver ein statistisch aussagekräftiger Mittelwert für Geschwindigkeit oder Geschwindigkeitsänderung erhalten wird;

d) Berechnung eines Toleranzbereichs für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers;

e) Auswahl einer vorbestimmten Route anhand eines zweiten Datensatzes, durch den eine Mehrzahl von Strecken mit einer Vielzahl von Streckensegmenten definiert ist;

f) Zuweisen von zumindest einer Manöverklasse zu jedem Streckensegment der Route;

g) Berechnung des prädizierten Energieverbrauchs für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver, und

h) Berechnung eines Toleranzbandes für den maximalen und minimalen Energieverbrauch durch Addition des Energieverbrauchs des Fahrzeugs für jedes entlang eines jeden Streckensegments durchgeführten Manövers unter Verwendung der in Schritt d) ermittelten maximalen und minimalen Mittelwerte für die Geschwindigkeit oder die Beschleunigung in Abhängigkeit von der Anzahl der Wiederholungen des Manövers, wobei durch Verwendung der Formel für die Gaußsche Fehlerfortpflanzung Abweichungen innerhalb von und/oder zwischen verschiedenen Manöverklassen kompensiert werden.

Gemäß einer ersten vorteilhaften Weiterbildung des erfindungsgemäßen Verfahrens werden die in den Schritten b) bis d) erhaltenen Daten für jede Manöverklasse in einem ersten Datensatz gespeichert. Hierdurch kann sichergestellt werden, dass diese Daten dauerhaft für die weitere Nutzung zur Verfügung stehen.

Gemäß einer weiteren vorteilhaften Weiterbildung des erfindungsgemäßen Verfahrens erfolgt eine Neuberechnung oder Veränderung der Betriebsstrategie des Fahrzeugs nur, wenn der tatsächliche Energieverbrauch des Fahrzeugs einen Wert außerhalb des berechneten Toleranzbandes aufweist. Solange sich der Fahrer bei einer realen Fahrt im prädizierten Toleranzband des Fahrprofils aufhält, ist erfindungsgemäß keine Neuberechnung oder Änderung der Betriebsstrategie erforderlich. Der Kraftstoffverbrauch (beispielsweise elektrischer Strom, kohlenwasserstoffhaltiger Brennstoff, wie Benzin, Diesel, Erdgas, Flüssiggas, und/oder Wasserstoff) wird mit Hilfe der prädiktiven Betriebsstrategie auf der vorgegebenen Strecke minimiert.

Gemäß noch einer weiteren vorteilhaften Weiterbildung des erfindungsgemäßen Verfahrens wird der erste und der zweite Datensatz in einem Speicher eines Kraftfahrzeugs abgelegt, erfolgt Schritt e) unter Zuhilfenahme einer Bedienvorrichtung in dem Kraftfahrzeug, und werden die Schritte b) bis d) und f) bis h) unter Zuhilfenahme einer Datenverarbeitungseinrichtung des Kraftfahrzeugs durchgeführt.

Gemäß noch einer weiteren vorteilhaften Weiterbildung des erfindungsgemäßen Verfahrens wird auch die Neuberechnung oder Veränderung der Betriebsstrategie des Fahrzeugs durch eine Datenverarbeitungseinrichtung des Kraftfahrzeugs durchgeführt.

Eine noch weitere vorteilhafte Weiterbildung des erfindungsgemäßen Verfahrens sieht vor, dass der in obigem Schritt e) bereitgestellte Datensatz auch eine Information über die Art von Straßen beinhaltet, und diese Information in obigem Schritt f) berücksichtigt wird.

Auch kann, wie dies gemäß einer noch weiteren vorteilhaften Weiterbildung des erfindungsgemäßen Verfahrens vorgesehen ist, der in obigem Schritt e) bereitgestellte Datensatz auch Informationen über die Höhe von Streckensegmenten beinhalten und diese Information in obigem Schritt f) berücksichtigt werden.

Die vorliegende Erfindung umfasst auch eine Vorrichtung mit einem Speicher, einer Bedienvorrichtung und einer Datenverarbeitungseinrichtung, wobei

a) in dem Speicher eine Mehrzahl von Manöverklassen gespeichert ist, denen als definierende Größen zumindest eine Einganggeschwindigkeit und eine Ausgangsgeschwindigkeit eines Fahrzeugs zugeordnet ist;

b) in dem Speicher Mittelwerte für Geschwindigkeit oder Geschwindigkeitsänderung in Abhängigkeit von der Anzahl der Wiederholungen des Manövers gespeichert sind, die durch wiederholtes Ausführen des Manövers einer jeden Manöverklasse durch einen Fahrer mit dem Fahrzeug ermittelt wurden;

c) in dem Speicher für jedes Manöver ein statistisch aussagekräftiger Mittelwert für Geschwindigkeit oder Geschwindigkeitsänderung gespeichert ist, der durch die ausreichend häufige Wiederholung eines jeden Manövers erhalten wird;

d) in dem Speicher ein Toleranzbereich für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers gespeichert ist;

e) in dem Speicher ein zweiter Datensatz, durch den eine Mehrzahl von Strecken mit einer Vielzahl von Streckensegmenten definiert ist, gespeichert ist;

f) mittels der Bedienvorrichtung eine vorbestimmte Route anhand des zweiten Datensatzes, durch den eine Mehrzahl von Strecken mit einer Vielzahl von Streckensegmenten definiert ist, auswählbar ist;

g) durch die Datenverarbeitungseinrichtung zumindest eine Manöverklasse zu jedem Streckensegment der Route zuweisbar ist;

h) durch die Datenverarbeitungseinrichtung der prädizierte Energieverbrauch für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver berechenbar ist, und

i) durch die Datenverarbeitungseinrichtung ein Toleranzband für den maximalen und minimalen Energieverbrauch durch Addition des Energieverbrauchs des Fahrzeugs für jedes entlang eines jeden Streckensegments durchgeführten Manövers unter Verwendung der maximalen und minimalen Mittelwerte für die Geschwindigkeit oder die Beschleunigung eines jeden Manövers in Abhängigkeit von der Anzahl der Wiederholungen des Manövers berechenbar ist, wobei durch Verwendung der Formel für die Gaußsche Fehlerfortpflanzung Abweichungen innerhalb von und/oder zwischen verschiedenen Manöverklassen kompensiert werden.

Eine erste vorteilhafte Weiterbildung der erfindungsgemäßen Vorrichtung sieht vor, dass die Datenverarbeitungseinrichtung weiter dazu eingerichtet ist, eine Neuberechnung oder Veränderung der Betriebsstrategie des Fahrzeugs vorzunehmen, wenn der tatsächliche Energieverbrauch des Fahrzeugs einen Wert außerhalb des vorhergesagten Toleranzbandes aufweist.

Gemäß einer weiteren vorteilhaften Weiterbildung der erfindungsgemäßen Vorrichtung beinhaltet der in dem Speicher gespeicherte Datensatz, durch den eine Mehrzahl von Strecken mit einer Vielzahl von Streckensegmenten definiert ist, auch eine Information über die Art von Straßen und ist die Datenverarbeitungseinrichtung dazu eingerichtet, diese Information in Punkt g) zu berücksichtigen.

Gemäß noch einer weiteren vorteilhaften Weiterbildung der erfindungsgemäßen Vorrichtung beinhaltet der in dem Speicher gespeicherte Datensatz, durch den eine Mehrzahl von Strecken mit einer Vielzahl von Streckensegmenten definiert ist, auch eine Information über die Höhe von Streckensegmenten und ist die Datenverarbeitungseinrichtung dazu eingerichtet, diese Information in Punkt g) zu berücksichtigen.

Die vorliegende Erfindung betrifft schließlich auch ein Kraftfahrzeug mit einer erfindungsgemäßen Vorrichtung.

In nachfolgenden wird die vorliegende Erfindung noch näher unter Bezugnahme auf die Figuren erläutert. Diese Erläuterung dient jedoch lediglich dem besseren Verständnis der Erfindung; die Erfindung ist selbstverständlich nicht auf den Inhalt dieser zusätzlichen Erläuterungen beschränkt.

Es zeigt:

Fig. 1:  eine Abbildung einer durchschnittlichen Verzögerung in Abhängigkeit von der Anzahl des durchgeführten Manövers und den Beharrungswert;

Fig. 2:  einen exemplarischen Auszug aus einem Geschwindigkeitsverlauf mit hierbei auftretenden Manöverklassen;

Fig. 3  ein Beispiel für einen prädizierten Energieverbrauch und eine Prädiktionsgüte.

Durch die vorliegende Erfindung wird durch die Ermittlung eines Toleranzbandes, die sogenannte Prädiktionsgüte, zusätzlich zu dem prädizierten Fahrprofil noch ein Toleranzband berechnet. Die Prädiktionsgüte liefert für die gesamte Route eine Aussage darüber, ob sich ein Fahrer auf einem auf stochastischer Auswertung beruhenden und natürlich vorkommenden Toleranzband aufhält. Die Betriebsstrategie für das Fahrzeug berücksichtigt bei der Optimierung genau dieses Toleranzband.

Solange sich der Fahrer bei der realen Fahrt im prädizierten Toleranzband des Fahrprofils aufhält, ist keine Neuberechnung oder Änderung der Betriebsstrategie erforderlich. Der Kraftstoffverbrauch wird hierdurch mit Hilfe der prädiktiven Betriebsstrategie auf der vorgegebenen Route minimiert.

Wie beispielsweise in der nicht vorveröffentlichten DE 10 2010 047 080.5 beschrieben, lässt sich der Geschwindigkeitsverlauf einer jeden Route durch bestimmte Manöverklassen (in DE 10 2010 047 080.5 als "Vorgänge" bezeichnet) beschrieben. Als Beispiele für derartige Manöverklassen seien hier erwähnt eine Beschleunigung von 50 auf 100 km/h, eine Konstantfahrt mit 70 km/h oder eine Verzögerung von 50 auf 30 km/h. Nach den bisherigen Erkenntnissen ist eine Anzahl von etwa 100 verschiedenen Manövern ausreichend, um den Geschwindigkeitsverlauf einer jeden beliebige Route ausreichend genau beschreiben zu können. Jede Manöverklasse enthält als definierende Größen zumindest eine Eingangsgeschwindigkeit und eine Ausgangsgeschwindigkeit eines Fahrzeugs.

Erfindungsgemäß wird für jede Manöverklasse eine Auswertung durchgeführt, bei der die durchschnittliche Geschwindigkeit oder durchschnittliche Geschwindigkeitsänderung eines Fahrers mit einem Fahrzeug gespeichert wird. Die bei der Auswertung ermittelten Werte werden bevorzugt in einer sogenannten Manöverklassenmatrix gespeichert.

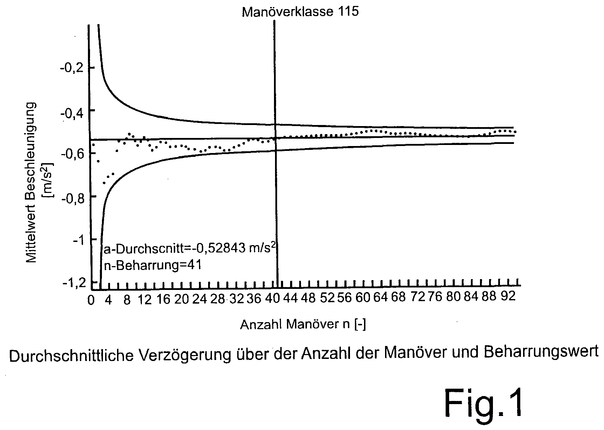

Wie in Fig. 1 gezeigt ist, schwankt der Mittelwert (angezeigt durch Punkte), d.h. der Wert für die durchschnittliche Geschwindigkeit oder durchschnittliche Geschwindigkeitsänderung bei einer geringen Anzahl an Manövern aufgrund der geringen Stichprobe stark. Mit zunehmender Anzahl der Manöver nähert sich dieser Mittelwert aber einem festen Wert an. Der in Fig. 1 durch einen senkrechten Strich angezeigte, stochastisch berechnete Beharrungswert (n=41) stellt die Mindestanzahl dar, die ein Manöver gefahren werden muss, um einen statistisch aussagekräftigen Mittelwert für Durchschnittsgeschwindigkeit bzw. -beschleunigung des Manövers zu erhalten.

Der Beharrungswert kann nach der Formel für den "Mindeststichprobenumfang" berechnet werden:

$$n_{Beharrung} = t_{0.995}^2 \cdot \frac{s_{a_\emptyset}^2}{b_a^2} \quad \text{bzw.} \quad n_{Beharrung} = t_{0.995}^2 \cdot \frac{s_{v_\emptyset}^2}{b_v^2}$$

Wie in Fig. 1 weiter dargestellt ist, wird für die Mittelwerte ein Toleranzband (angezeigt durch durchgezogene Linien) ermittelt. Dadurch ergeben sich in Abhängigkeit der Anzahl, wie oft ein Manöver vorkommt, ein maximaler und ein minimaler Wert für die Durchschnittsbeschleunigung bzw. -geschwindigkeit. Die Berechnung der Grenzen erfolgt mit Hilfe des stochastischen Ansatzes der "Messunsicherheit". Diese Messunsicherheit gibt an, in welchem Bereich um den Mittelwert sich ein Wert mit einer zuvor festgelegten Wahrscheinlichkeit in Abhängigkeit der Messwerte befindet.

$$a_{\emptyset,max} / a_{\emptyset,min} = \bar{a}_\emptyset \pm \Delta a_\emptyset = \bar{a}_\emptyset \pm t_a \cdot \frac{s_{a_\emptyset}}{\sqrt{n}} = \bar{a}_\emptyset \pm t_a \cdot s_{\bar{a}_\emptyset}$$

bzw.

$$v_{\emptyset,max} / v_{\emptyset,min} = \bar{v}_\emptyset \pm \Delta v_\emptyset = \bar{v}_\emptyset \pm t_v \cdot \frac{s_{v_\emptyset}}{\sqrt{n}} = \bar{v}_\emptyset \pm t_v \cdot s_{\bar{v}_\emptyset}$$

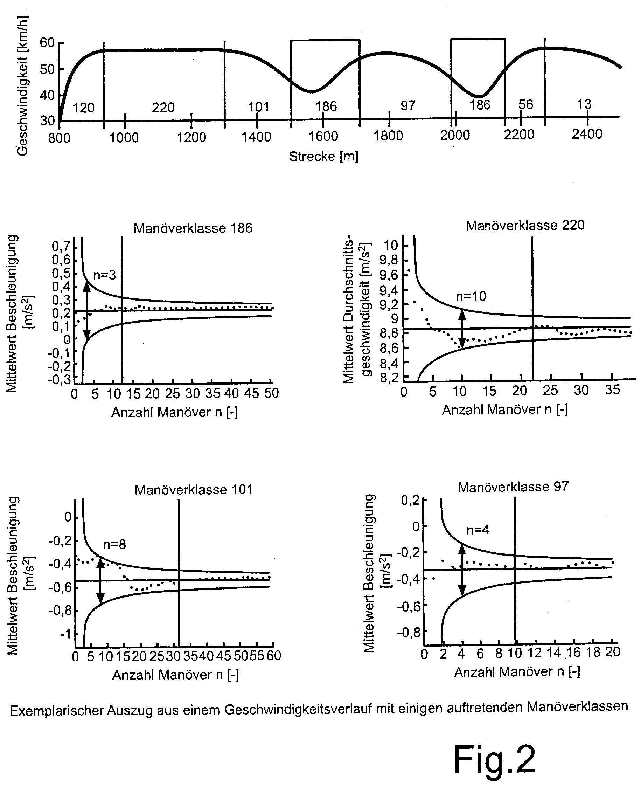

Wie in Fig. 2, oberste Abbildung dargestellt ist, interpretiert der Algorithmus den Geschwindigkeitsverlauf einer beliebigen Route als Aneinanderreihung von Manöverklassen. Im vorliegenden Beispiel als eine Aneinanderreihung der Manöverklassen 120, 220, 101, 186, 97, 186, 56 und 13.

Für jedes Segment einer Route kann so ein Durchschnittswert (von Geschwindigkeit bzw. Beschleunigung) sowie die stochastisch maximal zu akzeptierenden Abweichungen vorhergesagt werden.

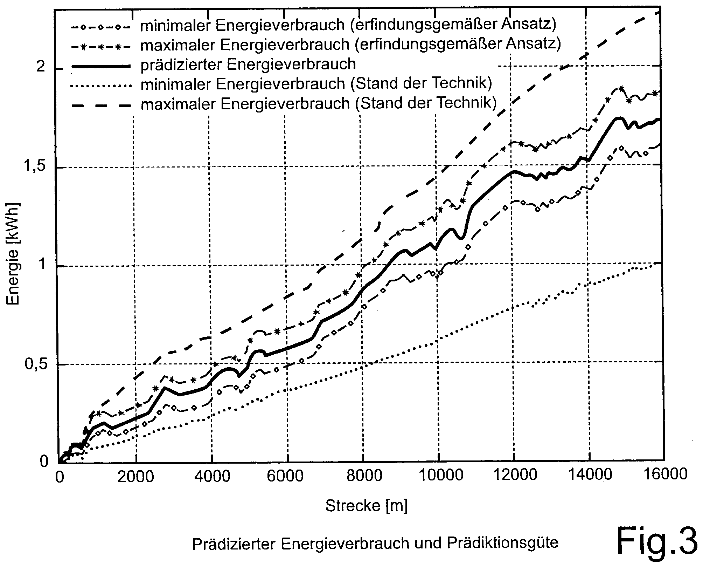

Wie in Fig. 3 dargestellt ist, lässt sich mit den Durchschnittswerten (Mittelwert bei n = Beharrung) mittels der Gleichungen für die Fahrwiderstände ein Energieverbrauch über der Strecke prädizieren.

Mit den zu akzeptierenden Abweichungen und einem neu entwickelten stochastischen Ansatz, welcher auf der "Gaußschen Fehlerfortpflanzung" beruht, kann prädiziert werden, welche Abweichungen sich vom prädizierten Energieverbrauch ergeben können.

Die "Gaußsche Fehlerfortpflanzung" wird berechnet nach folgendem Ansatz:

$$\Delta f = \sqrt{\sum_{i=1}^{n} \left( \left. \frac{\delta f}{\delta x_i} \right|_{\bar{x}_i} \cdot \Delta x_i \right)^2}$$

wobei $x_i$ die einzelnen Messgrößen darstellen, die in die Endgröße einfließen, welche durch die Funktion f berechnet wird. Bei der Energieberechnung stellen die Beharrungswerte der Geschwindigkeit bzw. der Beschleunigung der einzelnen Manöverklassen die Messgrößen dar. Falls es sich bei der Manöverklasse um eine Beschleunigung oder Verzögerung handelt berechnet sich die Energie wie folgt:

$$\sum E = E_{MKx} + E_{MKy} + E_{MKz} + \cdots =$$

$$= \sum ((k_{m_{rot}} + m_{Fzg}) \cdot a_{Beharrung} + m_{Fzg} \cdot g$$
$$\cdot \sin(\tan^{-1}(\Delta h/\Delta s)) + F_0 + F_1 \cdot v_\emptyset + F_2 \cdot v_\emptyset^2) \cdot \Delta s \cdot \eta$$

$$= \sum ((k_{m_{rot}} + m_{Fzg}) \cdot a_{Beharrung} + m_{Fzg} \cdot g$$
$$\cdot \sin(\tan^{-1}(2 \cdot a_{Beharrung} \cdot \Delta h/(v_E^2 - v_A^2))) + F_0 + F_1 \cdot v_\emptyset + F_2$$
$$\cdot v_\emptyset^2) \cdot \left(\frac{v_E^2 - v_A^2}{2 \cdot a}\right) \cdot \eta$$

mit

$$\Delta s = \frac{v_E^2 - v_A^2}{2 \cdot a_{Beharrung}} \text{ aus } v_E^2 = \sqrt{v_A^2 + 2 \cdot a_{Beharrung} \cdot \Delta s}$$

Als partielle Ableitung nach $a_{Beharrung}$ berechnet man:

$$\sum \frac{\delta E}{\delta a_{Beharrung}} =$$

$$= \sum \left( \left( \left( (k_{m\_rot} + m_{Fzg}) + m_{Fzg} \cdot g \right. \right. \right.$$

$$\left. \cdot \cos\left(\tan^{-1}\left(\frac{2 \cdot a_{Beharrung} \cdot \Delta h}{v_E^2 - v_A^2}\right)\right) \cdot \left(\frac{1}{1 + \left(\frac{2 \cdot a_{Beharrung} \cdot \Delta h}{v_E^2 - v_A^2}\right)^2}\right) \cdot \left(\frac{2 \cdot \Delta h}{v_E^2 - v_A^2}\right) \right)$$

$$\left. \cdot \left(\frac{v_E^2 - v_A^2}{2 \cdot a_{Beharrung}}\right) \right.$$

$$\left. + \left( (k_{m\_rot} + m_{Fzg}) \cdot a_{Beharrung} + m_{Fzg} \cdot g \cdot \sin\left(\tan^{-1}\left(\frac{2 \cdot a_{Beharrung} \cdot \Delta h}{v_E^2 - v_A^2}\right)\right) \right. \right.$$

$$\left. \left. + F_0 + F_1 \cdot v_0 + F_2 \cdot v_0^2 \right) \cdot \left(-\frac{v_E^2 - v_A^2}{2 \cdot a^2}\right) \right) \cdot \eta$$

$$= \sum \left( \left( \left( (k_{m\_rot} + m_{Fzg}) + m_{Fzg} \cdot g \cdot \cos\left(\tan^{-1}\left(\frac{\Delta h}{\Delta s}\right)\right) \cdot \left(\frac{1}{1 + \left(\frac{\Delta h}{\Delta s}\right)^2}\right) \cdot \left(\frac{2 \cdot \Delta h}{v_E^2 - v_A^2}\right) \right) \cdot \Delta s \right. \right.$$

$$\left. + \left( (k_{m\_rot} + m_{Fzg}) \cdot a_{Beharrung} + m_{Fzg} \cdot g \cdot \sin\left(\tan^{-1}\left(\frac{\Delta h}{\Delta s}\right)\right) + F_0 + F_1 \cdot v_0 \right. \right.$$

$$\left. \left. + F_2 \cdot v_0^2 \right) \cdot \left(-\frac{v_E^2 - v_A^2}{2 \cdot a^2}\right) \right) \cdot \eta$$

Für eine Konstantfahrt berechnet sich die Energie nach

$$\sum E = E_{MKx} + E_{MKy} + E_{MKz} + \cdots =$$

$$= \sum \left( m_{Fzg} \cdot g \cdot \sin(\tan^{-1}(\Delta h / \Delta s)) + F_0 + F_1 \cdot v_{Beharrung} + F_2 \cdot v_{Beharrung}^2 \right) \cdot \Delta s$$
$$\cdot \eta$$

Partiell abgeleitet nach $v_{Beharrung}$ ergibt sich:

$$\sum \frac{\delta E}{\delta v_{Beharrung}} = (2 \cdot F_2 \cdot v_{Beharrung} + F_1) \cdot \Delta s \cdot \eta$$

Die möglichen Abweichungen des prädizierten Gesamtenergieverbrauches $\Sigma E$ werden anschließend aus den Einzeltermen für die Manöverklassen berechnet:

$$\Delta \sum E = \sqrt{\sum \frac{\delta E}{\delta a_{Beharrung}} \bigg|_{a_{Beharrung}} \cdot \Delta a_\partial + \sum \frac{\delta E}{\delta v_{Beharrung}} \bigg|_{v_{Beharrung}} \cdot \Delta v_\partial}$$

Die Auswertung erfolgt schrittweise, das heißt nach jeder Manöverklasse wird ein neuer Term addiert. Den Wert für die Messunsicherheit $\Delta a_c$ bzw. $\Delta v_c$ erhält man in Abhängigkeit von der Anzahl der Manöverklasse, wie beispielsweise aus Fig. 1 ersichtlich ist.

Solange eine Manöverklasse bei der Fahrt nur einmal vorkommt, verwendet man den Wert für n=1. Sobald die Manöverklasse ein zweites Mal vorkommt, wird bei beiden Termen der Wert für n=2 verwendet, der Wert für die Messunsicherheit und damit die prädizierte Abweichung wird dadurch kleiner. Dadurch wird beachtet, dass sich der Mittelwert für die Beschleunigung bzw. Geschwindigkeit einer Manöverklasse mit steigender Anzahl immer mehr dem Beharrungswert annähert. Auf die Realität übertragen bedeutet das, dass der Fahrer statistisch gesehen bei einer Fahrt aufgrund äußerer und innerer Einflüsse, wie etwa Verkehrsstau oder Eile, wechselweise stärker oder schwächer beschleunigt. Dies gleicht sich jedoch umso mehr aus, je häufiger er diese Beschleunigung durchführt. Zusätzlich wird durch die quadratische Addition der Formel für die Gaußsche Fehlerfortpflanzung noch beachtet, dass sich auch Abweichungen innerhalb von und/oder zwischen verschiedenen Manöverklassen gegenseitig kompensieren. Durch diesen Ansatz steigen die zu tolerierenden Abweichungen über die Strecke nur geringfügig an, bisweilen wird das Toleranzband durch die Kompensation sogar schmaler.

Durch den oben beschriebenen Ansatz kann somit ein Toleranzband, die sogenannte Prädiktionsgüte, um den prädizierten Energieverbrauch gelegt werden, wie dies in Abb. 3 gezeigt ist. Die Abweichungen von dem prädizierten Energieverbrauch, die innerhalb des Toleranzbandes des erfindungsgemäßen Ansatzes liegen, können toleriert werden und erfordern keine Neuberechnung oder Veränderung der Betriebsstrategie.

**Patentansprüche**

1.  Verfahren zur Ermittlung einer Prädiktionsgüte um einen prädizierten Energieverbrauch eines Kraftfahrzeugs mit den Schritten:

    a) Bereitstellen einer Mehrzahl von Manöverklassen, denen als definierende Größen zumindest eine Eingangsgeschwindigkeit und eine Ausgangsgeschwindigkeit eines Fahrzeugs zugeordnet ist;
    b) Wiederholtes Ausführen des Manövers einer jeden Manöverklasse durch einen Fahrer mit dem Fahrzeug und Ermitteln von Mittelwerten für Geschwindigkeit oder Geschwindigkeitsänderung in Abhängigkeit von der Anzahl der Wiederholungen des Manövers;
    c) Wiederholung von Schritt b) zumindest bis für jedes Manöver ein statistisch aussagekräftiger Mittelwert für Geschwindigkeit oder Geschwindigkeitsänderung erhalten wird;
    d) Berechnung eines Toleranzbereichs für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers;
    e) Auswahl einer vorbestimmten Route anhand eines zweiten Datensatzes, durch den eine Mehrzahl von Strecken mit einer Vielzahl von Streckensegmenten definiert ist;
    f) Zuweisen von zumindest einer Manöverklasse zu jedem Streckensegment der Route;
    g) Berechnung des prädizierten Energieverbrauchs für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver, und
    h) Berechnung eines Toleranzbandes für den maximalen und minimalen Energieverbrauch durch Addition des Energieverbrauchs des Fahrzeugs für jedes entlang eines jeden Streckensegments durchgeführten Manövers unter Verwendung der in Schritt d) ermittelten maximalen und minimalen Mittelwerte für die Geschwindigkeit oder die Beschleunigung in Abhängigkeit von der Anzahl der Wiederholungen des Manövers, wobei durch Verwendung der Formel für die Gaußsche Fehlerfortpflanzung Abweichungen innerhalb von und/oder zwischen verschiedenen Manöverklassen kompensiert werden.

2.  Verfahren nach Anspruch 1, wobei die in den Schritten b) bis d) erhaltenen Daten für jede Manöverklasse in einem ersten Datensatz gespeichert werden.

3.  Verfahren nach Anspruch 1 oder 2, wobei eine Neuberechnung oder Veränderung der Betriebsstrategie des Fahrzeugs erfolgt, wenn der tatsächliche Energieverbrauch des Fahrzeugs einen Wert außerhalb des berechneten Toleranzbandes aufweist.

4.  Verfahren nach einem der vorhergehenden Ansprüche, wobei der erste und der zweite Datensatz in einem Speicher eines Kraftfahrzeugs abgelegt werden, Schritt e) unter Zuhilfenahme einer Bedienvorrichtung in dem Kraftfahrzeug erfolgt, und die Schritte b) bis d) und f) bis h) unter Zuhilfenahme einer Datenverarbeitungseinrichtung des Kraftfahrzeugs durchgeführt werden.

5.  Verfahren nach Anspruch 3, wobei die Neuberechnung oder Veränderung der Betriebsstrategie des Fahrzeugs durch eine Datenverarbeitungseinrichtung des Kraftfahrzeugs durchgeführt wird.

6.  Verfahren nach einem der vorhergehenden Ansprüche, bei dem der in Schritt e) von Anspruch 1 bereitgestellte Datensatz auch eine Information über die Art von Straßen beinhaltet. und diese Information in Schritt f) von Anspruch 1 berücksichtigt wird.

7.  Verfahren nach einem der vorhergehenden Ansprüche, bei dem der in Schritt e) von Anspruch 1 bereitgestellte Datensatz auch Informationen über die Höhe von Streckensegmenten beinhaltet und diese Information in Schritt f) von Anspruch 1 berücksichtigt wird.

8.  Vorrichtung mit einem Speicher, einer Bedienvorrichtung und einer Datenverarbeitungseinrichtung, wobei

a) in dem Speicher eine Mehrzahl von Manöverklassen gespeichert ist, denen als definierende Größen zumindest eine Einganggeschwindigkeit und eine Ausgangsgeschwindigkeit eines Fahrzeugs zugeordnet ist;
b) in dem Speicher Mittelwerte für Geschwindigkeit oder Geschwindigkeitsänderung in Abhängigkeit von der Anzahl der Wiederholungen des Manövers gespeichert sind, die durch wiederholtes Ausführen des Manövers einer jeden Manöverklasse durch einen Fahrer mit dem Fahrzeug ermittelt wurden;
c) in dem Speicher für jedes Manöver ein statistisch aussagekräftiger Mittelwert für Geschwindigkeit oder Geschwindigkeitsänderung gespeichert ist, der durch die ausreichend häufige Wiederholung eines jeden Manövers erhalten wird;
d) in dem Speicher ein Toleranzbereich für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers gespeichert ist;
e) in dem Speicher ein zweiter Datensatz, durch den eine Mehrzahl von Strecken mit einer Vielzahl von Streckensegmenten definiert ist, gespeichert ist;
f) mittels der Bedienvorrichtung eine vorbestimmte Route anhand des zweiten Datensatzes, durch den eine Mehrzahl von Strecken mit einer Vielzahl von Streckensegmenten definiert ist, auswählbar ist;
g) durch die Datenverarbeitungseinrichtung zumindest eine Manöverklasse zu jedem Streckensegment der Route zuweisbar ist;
h) durch die Datenverarbeitungseinrichtung der prädizierte Energieverbrauch für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver berechenbar ist, und
i) durch die Datenverarbeitungseinrichtung ein Toleranzband für den maximalen und minimalen Energieverbrauch durch Addition des Energieverbrauchs des Fahrzeugs für jedes entlang eines jeden Streckensegments durchgeführten Manövers unter Verwendung der maximalen und minimalen Mittelwerte für die Geschwindigkeit oder die Beschleunigung eines jeden Manövers in Abhängigkeit von der Anzahl der Wiederholungen des Manövers berechenbar ist, wobei durch Verwendung der Formel für die Gaußsche Fehlerfortpflanzung Abweichungen innerhalb von und/oder zwischen verschiedenen Manöverklassen kompensiert werden.

9. Vorrichtung nach Anspruch 8, wobei die Datenverarbeitungseinrichtung weiter dazu eingerichtet ist, eine Neuberechnung oder Veränderung der Betriebsstrategie des Fahrzeugs vorzunehmen, wenn der tatsächliche Energieverbrauch des Fahrzeugs einen Wert außerhalb des vorhergesagten Toleranzbandes aufweist.

10. Vorrichtung nach Anspruch 8 oder 9, wobei der in dem Speicher gespeicherte Datensatz, durch den eine Mehrzahl von Strecken mit einer Vielzahl von Streckensegmenten definiert ist, auch eine Information über die Art von Straßen beinhaltet und die Datenverarbeitungseinrichtung dazu eingerichtet ist, diese Information in Punkt g) zu berücksichtigen.

11. Vorrichtung nach einem der Ansprüche 8 bis 10, wobei der in dem Speicher gespeicherte Datensatz, durch den eine Mehrzahl von Strecken mit einer Vielzahl von Streckensegmenten definiert ist, auch eine Information über die Höhe von Streckensegmenten beinhaltet und die Datenverarbeitungseinrichtung dazu eingerichtet ist, diese Information in Punkt g) zu berücksichtigen.

**Claims**

1. Method for determining a prediction quality for a predicted energy consumption of a motor vehicle comprising the steps:

   a) providing a plurality of manoeuvre classes to which at least one input speed and one output speed of a vehicle are associated as defining variables;
   b) repeated implementation of the manoeuvre in each manoeuvre class by a driver with the vehicle and determining average values for speed or change of speed depending on the number of repetitions of the manoeuvre;
   c) repetition of step b) at least until a statistically meaningful average value for speed or change of speed is obtained for each manoeuvre;
   d) computing a tolerance range for the average values of each manoeuvre with maximum and minimum values for the average speed or the average acceleration depending on the number of repetitions of each manoeuvre;
   e) selecting a predetermined route using a second data record, by which a plurality of routes with a plurality of route segments are defined;
   f) assigning at least one manoeuvre class to each segment of the route;
   g) computing the predicted energy consumption for the route by the addition of the predicted energy consumption of the vehicle for each manoeuver carried out along each route segment using the determined, statistically meaningful average value for speed or change of speed for each manoeuver, and
   h) computing a tolerance band for the maximum and minimum energy consumption by the addition of the energy consumption of the vehicle for each manoeuvre carried out along each route segment using the maximum and minimum average values for the speed or the acceleration determined in step d) depending on the number of repetitions of the manoeuvre,

   wherein deviations within and/or between different manoeuvre classes are compensated by using the formula for Gaussian error propagation.

2. Method according to claim 1, wherein the data obtained for each manoeuvre class in steps b) to d) are stored in a first data record.

3. Method according to claim 1 or 2, wherein a recalculation or change of the operating strategy of the vehicle takes place if the actual energy consumption of the vehicle has a value outside the computed tolerance band.

4. Method according to any one of the preceding claims, wherein the first and the second data record are stored in a memory of a vehicle, step e) takes place with the aid of a control device in the vehicle, and steps b) to d) and f) to h) are carried out with the aid of a data processing device of the vehicle.

5. Method according to claim 3, wherein the recalculation or change of the operating strategy of the vehicle is carried out by a data processing device of the vehicle.

6. Method according to any one of the preceding claims in which the data record provided in step e) of claim 1 also contains information about the type of roads and said information is taken into account in step f) of claim 1.

**7.** Method according to any one of the preceding claims, in which the data record provided in step e) of claim 1 also contains information about the altitude of route segments and said information is taken into account in step f) of claim 1.

**8.** Device having a memory, a control device and a data processing device, wherein

a) a plurality of manoeuvre classes, to which at least one input speed and one output speed of a vehicle are associated as defining variables, are stored in the memory;
b) average values for speed or change of speed depending on the number of repetitions of the manoeuvre, which were determined by repeated implementations of the manoeuvre in each manoeuvre class by a driver with the vehicle, are stored in the memory;
c) a statistically meaningful average value for speed or change of speed, which is obtained by the sufficiently frequent repetition of each manoeuvre, is stored in the memory for each manoeuvre;
d) a tolerance range for the average values of each manoeuvre with maximum and minimum values for the average speed or the average acceleration depending on the number of repetitions of each manoeuvre is stored in the memory;
e) a second data record, by which a plurality of routes with a plurality of route segments are defined, is stored in the memory;
f) a predetermined route can be selected by the control device using the second data record, by which a plurality of routes with a plurality of route segments are defined;
g) at least one manoeuvre class can be assigned to each segment of the route by the data processing device;
h) the predicted energy consumption for the route can be computed by the data processing device by the addition of the predicted energy consumption of the vehicle for each manoeuvre carried out along each route segment using the determined, statistically meaningful average value for speed or change of speed for each manoeuvre, and
i) a tolerance band for the maximum and minimum energy consumption can be computed by the data processing device by the addition of the energy consumption of the vehicle for each manoeuvre carried out along each route segment using the maximum and minimum average values for the speed or the acceleration of each manoeuvre depending on the number of repetitions of the manoeuvre, wherein deviations within and/or between different manoeuvre classes are compensated by using the formula for Gaussian error propagation.

**9.** Device according to claim 8, wherein the data processing device is further arranged to carry out a recalculation or change of the operating strategy of the vehicle if the actual energy consumption of the vehicle has a value outside of the predicted tolerance band.

**10.** Device according to claim 8 or 9, wherein the data record stored in the memory, by which a plurality of routes with a plurality of route segments are defined, also contains information about the type of roads and the data processing device is arranged to take into account said information in point g).

**11.** Device according to any one of claims 8 to 10, wherein the data record stored in the memory, by which a plurality of routes with a plurality of route segments are defined, also contains information about the altitude of route segments and the data processing device is arranged to take into account said information in point g).

## Revendications

**1.** Procédé pour déterminer une qualité de prédiction concernant une consommation d'énergie prédite d'un véhicule automobile, comprenant les étapes :

a) fourniture d'une pluralité de classes de manoeuvres auxquelles sont associées comme grandeurs de définition au moins une vitesse d'entrée et une vitesse de sortie d'un véhicule ;
b) exécution répétée de la manoeuvre de chaque classe de manoeuvre par un conducteur avec le véhicule et détermination de valeurs moyennes pour la vitesse ou la variation de vitesse en fonction du nombre des répétitions de la manoeuvre ;
c) répétition de l'étape b) au moins jusqu'à obtenir pour chaque manoeuvre une valeur moyenne statistiquement significative pour la vitesse ou la variation de vitesse ;
d) calcul d'une plage de tolérance pour les valeurs moyennes de chaque manoeuvre avec des valeurs maximales et minimales pour la vitesse moyenne ou l'accélération moyenne en fonction du nombre des répétitions de chaque manoeuvre ;

e) sélection d'un itinéraire prédéterminé à l'aide d'un deuxième ensemble de données, par lequel plusieurs tronçons avec plusieurs segments de tronçons sont définis ;

f) attribution d'au moins une classe de manoeuvre à chaque segment de tronçon de l'itinéraire ;

g) calcul de la consommation d'énergie prédite pour l'itinéraire par addition de la consommation d'énergie prédite du véhicule pour chaque manoeuvre effectuée le long de chaque segment de tronçon en utilisant la valeur moyenne statistiquement significative déterminée pour la vitesse ou la variation de vitesse pour chaque manoeuvre, et

h) calcul d'une plage de tolérance pour la consommation d'énergie maximale et minimale par addition de la consommation d'énergie du véhicule pour chaque manoeuvre effectuée le long de chaque segment de tronçon en utilisant les valeurs moyennes maximales et minimales déterminées à l'étape d) pour la vitesse ou l'accélération en fonction du nombre des répétitions de la manoeuvre,

dans lequel des écarts au sein et/ou entre des classes de manoeuvres différentes sont compensés par l'utilisation de la formule pour la loi gaussienne de propagation des erreurs.

**2.** Procédé selon la revendication 1, dans lequel les données obtenues aux étapes b) à d) pour chaque classe de manoeuvre sont mémorisées dans un premier ensemble de données.

**3.** Procédé selon la revendication 1 ou 2, dans lequel un nouveau calcul ou une modification de la stratégie de fonctionnement du véhicule s'effectue lorsque la consommation d'énergie réelle du véhicule a une valeur en dehors de la plage de tolérance calculée.

**4.** Procédé selon l'une des revendications précédentes, dans lequel le premier et le deuxième ensemble de données sont enregistrés dans une mémoire d'un véhicule automobile, l'étape e) s'effectue à l'aide d'un dispositif de commande dans le véhicule automobile et les étapes b) à d) et f) à h) sont exécutées à l'aide d'un ordinateur du véhicule automobile.

**5.** Procédé selon la revendication 3, dans lequel le nouveau calcul ou la modification de la stratégie de fonctionnement du véhicule est effectué par un ordinateur du véhicule automobile.

**6.** Procédé selon l'une des revendications précédentes, dans lequel l'ensemble de données fourni à l'étape e) de la revendication 1 contient aussi une information sur le type de routes, et cette information est prise en compte à l'étape f) de la revendication 1.

**7.** Procédé selon l'une des revendications précédentes, dans lequel l'ensemble de données fourni à l'étape e) de la revendication 1 contient aussi une information sur l'altitude de segments de tronçons et cette information est prise en compte à l'étape f) de la revendication 1.

**8.** Dispositif avec une mémoire, avec un dispositif de commande et avec un ordinateur, dans lequel

a) dans la mémoire sont mémorisées plusieurs classes de manoeuvres auxquelles sont associées comme grandeurs de définition au moins une vitesse d'entrée et une vitesse de sortie d'un véhicule ;

b) dans la mémoire sont mémorisées des valeurs moyennes pour la vitesse ou la variation de vitesse en fonction du nombre des répétitions de la manoeuvre, lesquelles valeurs moyennes ont été déterminées par une exécution répétée de la manoeuvre de chaque classe de manoeuvre par un conducteur avec le véhicule ;

c) dans la mémoire est mémorisée pour chaque manoeuvre une valeur moyenne statistiquement significative pour la vitesse ou la variation de vitesse, laquelle valeur moyenne est obtenue par la répétition suffisamment fréquente de chaque manoeuvre;

d) dans la mémoire est mémorisée une plage de tolérance pour les valeurs moyennes de chaque manoeuvre avec des valeurs maximales et minimales pour la vitesse moyenne ou l'accélération moyenne en fonction du nombre des répétitions de chaque manoeuvre ;

e) dans la mémoire est mémorisé un deuxième ensemble de données par lequel plusieurs tronçons avec plusieurs segments de tronçons sont définis ;

f) au moyen du dispositif de commande peut être sélectionné un itinéraire prédéterminé à l'aide du deuxième ensemble de données par lequel plusieurs tronçons avec plusieurs segments de tronçons sont définis ;

g) par l'ordinateur peut être attribué à chaque segment de tronçon de l'itinéraire au moins une classe de manoeuvre ;

h) par l'ordinateur peut être calculée la consommation d'énergie prédite pour l'itinéraire par addition de la consommation d'énergie prédite du véhicule pour chaque manoeuvre effectuée le long de chaque segment de tronçon en utilisant la valeur moyenne statistiquement significative déterminée pour la vitesse ou la variation de vitesse pour chaque manoeuvre, et

i) par l'ordinateur peut être calculée une plage de tolérance pour la consommation d'énergie maximale et minimale par addition de la consommation d'énergie du véhicule pour chaque manoeuvre effectuée le long de chaque segment de tronçon en utilisant les valeurs moyennes maximales et minimales pour la vitesse ou l'accélération de chaque manoeuvre en fonction du nombre des répétitions de la manoeuvre,

dans lequel des écarts au sein et/ou entre des classes de manoeuvres différentes sont compensés par l'utilisation de la formule pour la loi gaussienne de propagation des erreurs.

9. Dispositif selon la revendication 8, dans lequel l'ordinateur est aussi conçu pour effectuer un nouveau calcul ou une modification de la stratégie de fonctionnement du véhicule lorsque la consommation d'énergie réelle du véhicule a une valeur en dehors de la plage de tolérance prédite.

10. Dispositif selon la revendication 8 ou 9, dans lequel l'ensemble de données qui est enregistré dans la mémoire et par lequel plusieurs tronçons avec plusieurs segments de tronçons sont définis contient aussi une information sur le type de routes et l'ordinateur est conçu pour prendre en compte cette information au point g).

11. Dispositif selon l'une des revendications 8 à 10, dans lequel l'ensemble de données qui est enregistré dans la mémoire et par lequel plusieurs tronçons avec plusieurs segments de tronçons sont définis contient aussi une information sur l'altitude de segments de tronçons et l'ordinateur est conçu pour prendre en compte cette information au point g).

Durchschnittliche Verzögerung über der Anzahl der Manöver und Beharrungswert

# Fig.1

Exemplarischer Auszug aus einem Geschwindigkeitsverlauf mit einigen auftretenden Manöverklassen

Fig.2

Prädizierter Energieverbrauch und Prädiktionsgüte

Fig.3

**IN DER BESCHREIBUNG AUFGEFÜHRTE DOKUMENTE**

**In der Beschreibung aufgeführte Patentdokumente**

- DE 102008035944 A1
- US 20100235030 A
- DE 102007036794

- DE 102010047080